# EUROPEAN PATENT APPLICATION

(11) **EP 2 383 718 A1**
(43) Date of publication of application: **02.11.2011**
(21) Application number: 10774649.7
(22) Date of filing: 22.01.2010
(51) Int. Cl.: G09F 9/30, G02F 1/1333, G02F 1/1335, G02F 1/13363

(54) **DISPLAY APPARATUS**

(30) Priority: 15.05.2009 JP 2009118913
(71) Applicant: Sharp Kabushiki Kaisha, Osaka-shi, Osaka 545-8522 (JP)
(72) Inventor: NEMOTO, Tadashi, Osaka 545-8522 (JP); USUKURA, Naru, Osaka 545-8522 (JP); KATOH, Hiromi, Osaka 545-8522 (JP); SHIGETA, Hiroaki, Osaka 545-8522 (JP); YUKI, Ryuzo, Osaka 545-8522 (JP); KANBAYASHI, Yuuichi, Osaka 545-8522 (JP)
(74) Representative: Rocke, Carsten
(86) International application number: PCT/JP2010/000356
(87) International publication number: WO 2010/131387

(57) **Abstract**

A liquid crystal display device (display device) (100) of the present invention includes a display panel (20) provided with a plurality of light sensor elements, and has an area sensor function in which the plurality of light sensor elements detect an image on a surface of the liquid crystal display device, so as to determine a location of an input from outside. The liquid crystal display device includes (i) a front side polarizing plate (40) provided on or above a surface of the display panel (20) which surface is on an image display surface side and (ii) a λ/2 phase plate (50b) and a λ/4 phase plate (50a) which are stacked in this order on the front side polarizing plate (40) so that an optical axis (a slow axis) of the λ/2 phase plate (50b) and an optical axis (a slow axis) of the λ/4 phase plate (50a) intersect with each other. The phase plate formed by stacking the λ/2 phase plate (50b) and the λ/4 phase plate (50a) is referred to as a broadband λ/4 phase plate (50). This makes a light sensor equipped display device which (i) prevents a reflection of light coming from a display image and (ii) allows determination of an input location with higher accuracy.

## Description

### Technical Field

The present invention relates to a display device including a display panel in which a light sensor element is provided.

### Background Art

A flat panel display device as typified by a liquid crystal display device has features such as flatness, lightweight, and low power consumption. Further, a technological development is advancing in such a flat panel display device so as to improve a display performance such as causing the flat panel display device to be colored, to have a higher definition, and to respond to a moving picture. Therefore, the flat panel display device is currently incorporated into various electronic devices such as a mobile phone, a PDA, a DVD player, a mobile game machine, a laptop PC, a PC monitor, and a TV.

Against a backdrop of this, a liquid crystal display device has recently been developed in which each pixel (or any one of RGB pixels) in an image display region is provided with a corresponding light sensor element. For example, Patent Literature 1 discloses a liquid crystal display device in which light sensor elements of photodiodes are provided in a pixel region. In such a case where each pixel is provided with a corresponding light sensor element, a function as an area sensor (specifically, a scanner function, a touch panel function, or the like) can be implemented in a general liquid crystal display device. Namely, in a case where a light sensor element mentioned above serves as an area sensor, a touch panel (or scanner) integrated display device can be made.

### Citation List

Patent Literature 1
   Japanese Patent Application Publication, Tokukai, No. 2006-18219 A (Publication Date: January 19, 2006)
Patent Literature 2
   Japanese Patent Application Publication, Tokukai, No. 2000-112663 A (Publication Date: April 21, 2000)
Patent Literature 3
   Japanese Patent Application Publication, Tokukaihei, No. 10-68816 A (Publication Date: March 10, 1998)
Patent Literature 4
   Japanese Patent Application Publication, Tokukai, No. 2000-259349 A (Publication Date: September 22, 2000)
Non Patent Literature 1
   "Technologies and Developments of Touchpanels", p. 121 (Publishing Date: December 27, 2004; Supervisor: Yuji MITANI; Publisher: Kentaro SHIMA, Publishing Company: CMC Publishing Co., Ltd.)

### Summary of Invention

### Technical Problem

According to a display device having an area sensor function as described above, a light sensor element provided in a panel detects, as an image, a user's finger, a pen, or the like with which a panel surface is touched, so as to recognize an input location.

Namely, an image (a shade) formed when a finger, a pen, or the like approaches a panel surface is detected in a display device having an area sensor function. Such an area sensor equipped display device has a problem such that an image displayed on a display panel is reflected by a panel surface, a finger, or the like.

According to an ideal display device having an area sensor function, on a part of a panel surface which part is not touched with a finger or the like (is not an input location), a light sensor element is desired to output a value which is uniform and substantially equal to a value outputted by an external light sensor which detects a brightness of surrounding light. However, in a case where a display image is reflected by the panel surface or the like, the light sensor element also detects light reflected from the panel surface. Therefore, an output value of the light sensor element changes in accordance with a brightness of the display image. As described above, a change in output value of the light sensor element due to an influence of the display image causes a serious deterioration in accuracy with which an input location is determined.

For example, in a case where a display image is bright, the display image is reflected by a boundary surface between respective layers of a protection plate, an acrylic plate, and the like which are provided in a device. A light sensor element, which is influenced by light reflected from the boundary surface, outputs a high value in a place different from an actual input location. This causes an area sensor to incorrectly recognize an input location.

Patent Literature 2 discloses a transparent touch panel in which (i) two transparent electroconductive substrates which are coated with respective transparent electroconductive films are provided so that the respective transparent electroconductive films face each other and (ii) location determination is carried out by pressing the upper side transparent electroconductive substrate to be in contact with the lower side transparent electroconductive substrate. Patent Literature 2 also discloses the technique in which, in a case where the transparent touch panel is provided on a liquid crystal panel, the upper side transparent electroconductive substrate is provided with a λ/4 phase plate so as to prevent an image displayed on the liquid crystal panel from being less visible due to a reflection of external light by a touch panel.

However, according to the arrangement, a deterioration in visibility due to a reflection of external light by a panel surface can be prevented, but light coming from a display image cannot be prevented from being reflected by the panel surface and then going back to inside the panel.

The present invention has been made in view of the problems, and an object of the present invention is to make a light sensor equipped display device which prevents a reflection of light coming from a display image and allows determination of an input location with higher accuracy.

### Solution to Problem

In order to attain the object, a display device in accordance with the present invention including a display panel provided with a plurality of light sensor elements, and having an area sensor function in which the plurality of light sensor elements detect an image on a surface of the display device, so as to determine a location of an input from outside, the display device includes: a polarizing plate provided on or above a surface of the display panel which surface is on an image display surface side; and a λ/4 phase plate provided on or above a surface of the polarizing plate which surface is on the image display surface side.

Note here that "the surface of the polarizing plate which surface is on the image display surface side" refers to a surface of the polarizing plate on which surface no display panel is provided and which surface is located between the image display surface and the display panel.

According to the arrangement, since the display device includes the λ/4 phase plate provided on or above the polarizing plate, light coming from an image displayed on the display panel and being reflected by, for example, the surface of the display device can be blocked in accordance with the following principle.
(1) After passing through the polarizing plate, light from the display panel becomes linearly polarized light (e.g., light which is linearly polarized in a horizontal direction).
(2) After passing through the λ/4 phase plate, the linearly polarized light (1) becomes right-handed circularly polarized light.
(3) After being reflected by the surface of the display device, a finger, or the like, the right-handed circularly polarized light (2) becomes left-handed circularly polarized light.
(4) After passing through the λ/4 phase plate, the reflected left-handed circularly polarized light (3) becomes linearly polarized light (e.g., light which is linearly polarized in a vertical direction).
(5) The linearly polarized light (4), which is polarized in a direction different from a transmission axis of the polarizing plate, cannot pass through the polarizing plate.

According to the above principle, a combination of the polarizing plate and the λ/4 phase plate can prevent light from entering the display panel, the light being caused by an image display and reflected without passing through the surface of the display device. This can (i) prevent a change in output value of a light sensor element due to an influence of reflected light from a display image and (ii) allows determination of an input location with higher accuracy.

In addition, a regular reflection component of reflected light from an object (referred to as an input object) such as a finger or an input pen by which an input is provided on the surface of the display device can also be blocked. This can prevent a deterioration in detection sensitivity of the light sensor element due to an influence of the reflected light from the input object.

### Advantageous Effects of Invention

A display device in accordance with the present invention including a display panel provided with a plurality of light sensor elements, and having an area sensor function in which the plurality of light sensor elements detect an image on a surface of the display device, so as to determine a location of an input from outside, the display device includes: a polarizing plate provided on or above a surface of the display panel which surface is on an image display surface side; and a λ/4 phase plate provided on or above a surface of the polarizing plate which surface is on the image display surface side.

According to the arrangement, a display device can be made which prevents a reflection of light coming from a display image and allows determination of an input location with higher accuracy.

### Brief Description of Drawings

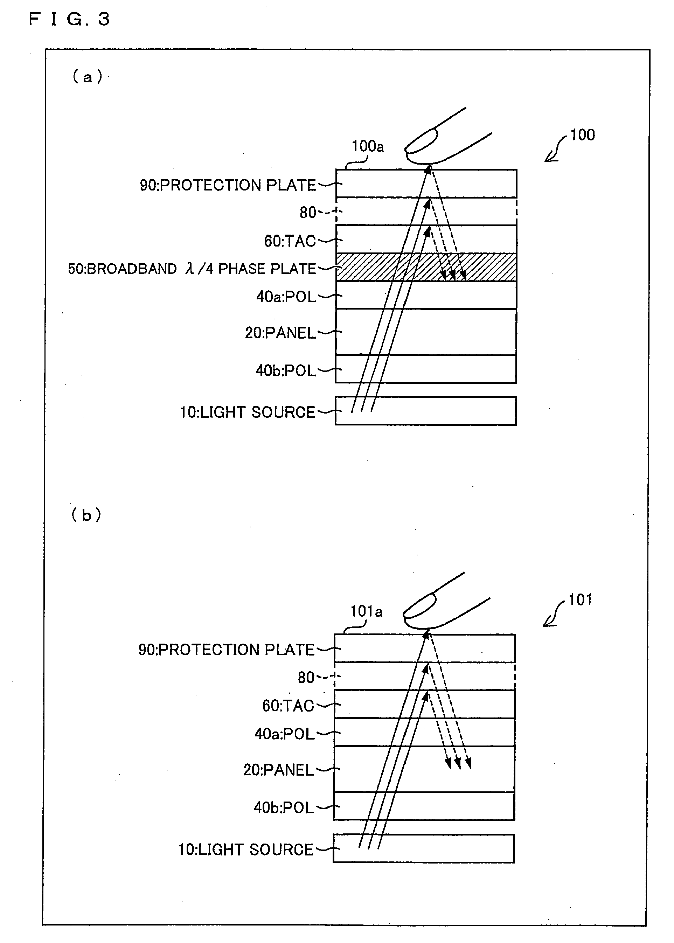

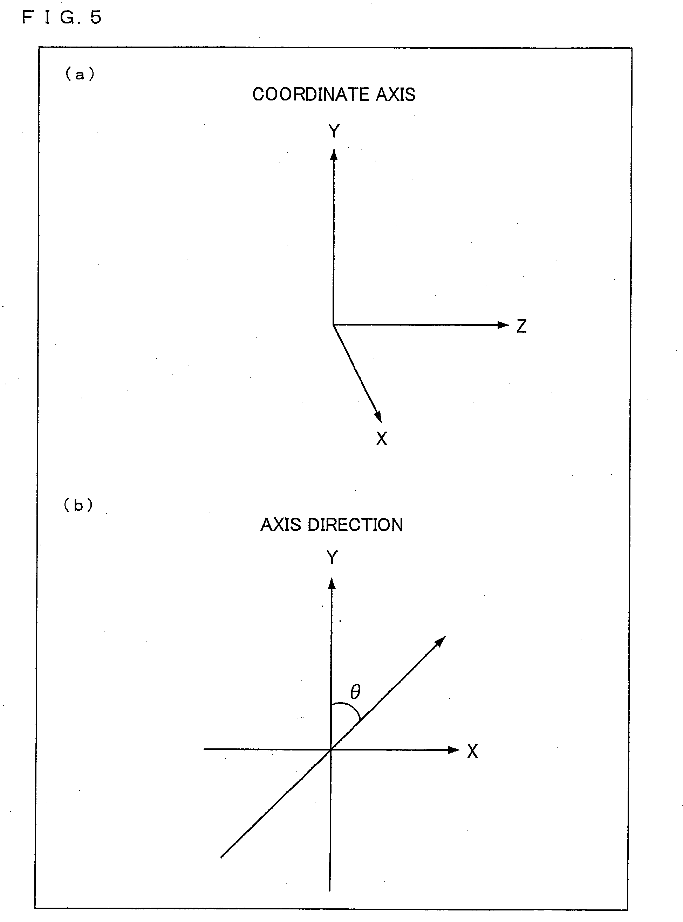

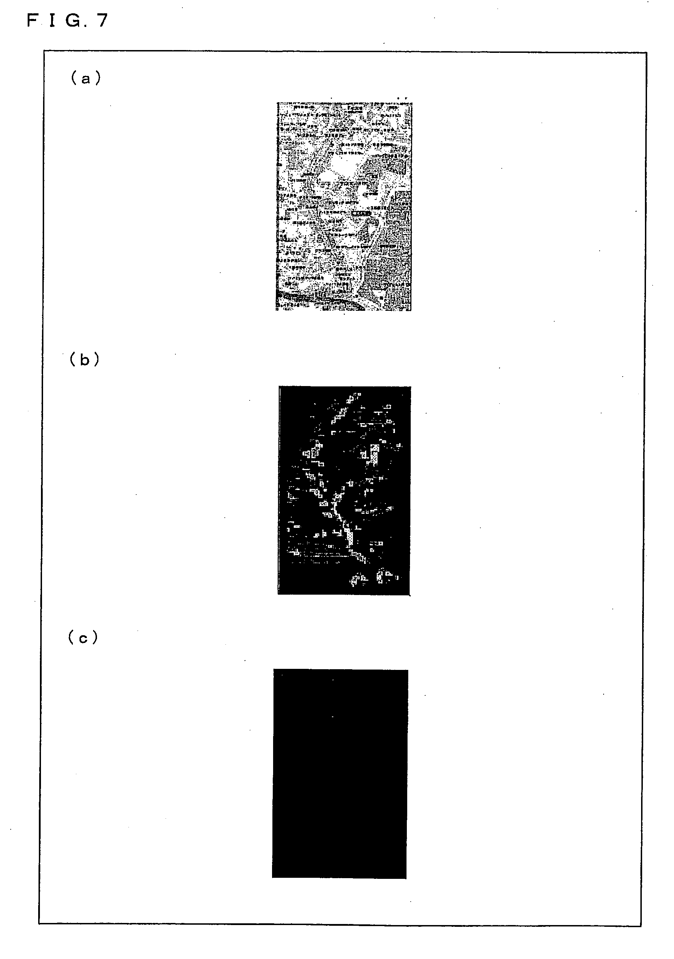

Fig. 1

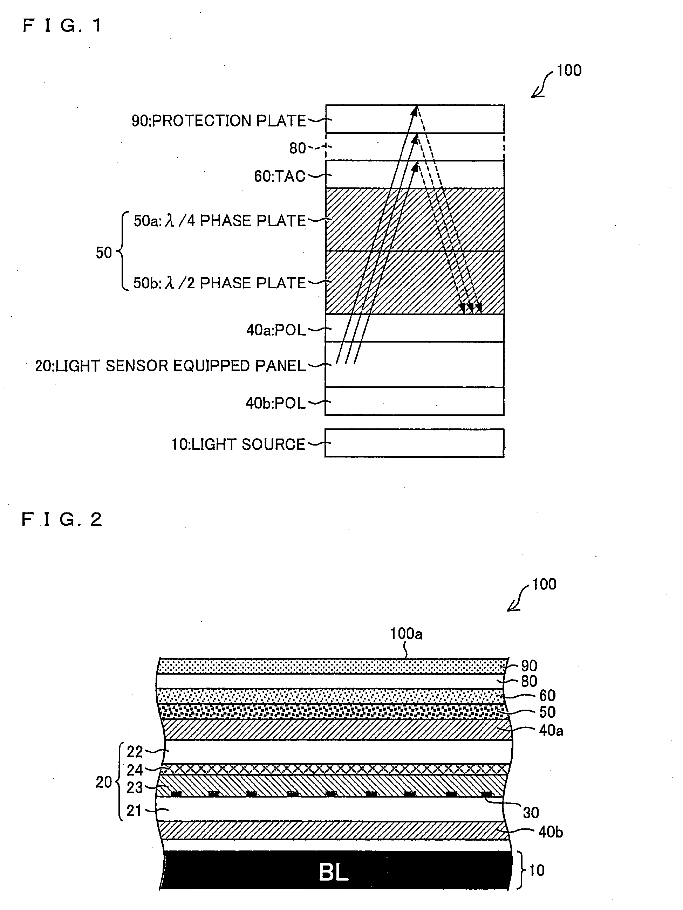

   Fig. 1 schematically illustrates (i) an overall arrangement of a liquid crystal display device illustrated in Fig. 2 and (ii) optical paths in each of which reflected light passes through boundary surfaces in the liquid crystal display device.
Fig. 2
   Fig. 2 is a cross-sectional view illustrating an arrangement of a liquid crystal display device in accordance with a first embodiment of the present invention.
Fig. 3
   (a) of Fig. 3 schematically illustrates a liquid crystal display device of the present invention provided with a broadband λ/4 phase plate. (b) of Fig. 3 schematically illustrates a liquid crystal display device of a comparative embodiment provided with no broadband λ/4 phase plate.
Fig. 4

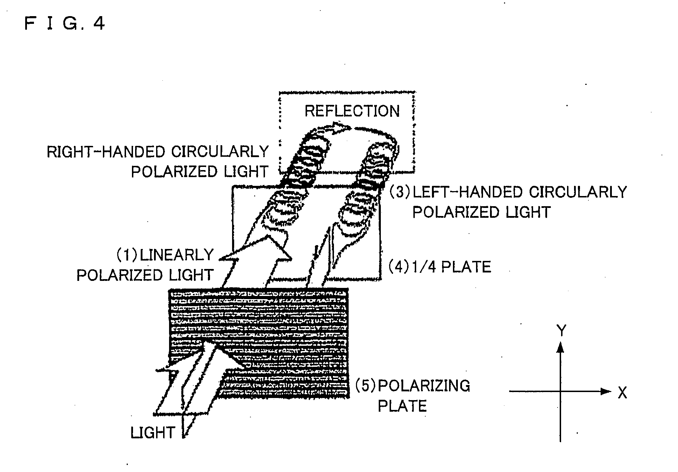

   Fig. 4 schematically illustrates a principle that a combination of a polarizing plate and a λ/4 phase plate blocks reflected light.
Fig. 5
   (a) of Fig. 5 schematically illustrates coordinate axes for explaining a positional relationship between respective optical axes of a polarizing plate and a phase plate. (b) of Fig. 5 schematically illustrates angles of the respective optical axes on an x-y plane.
Fig. 6

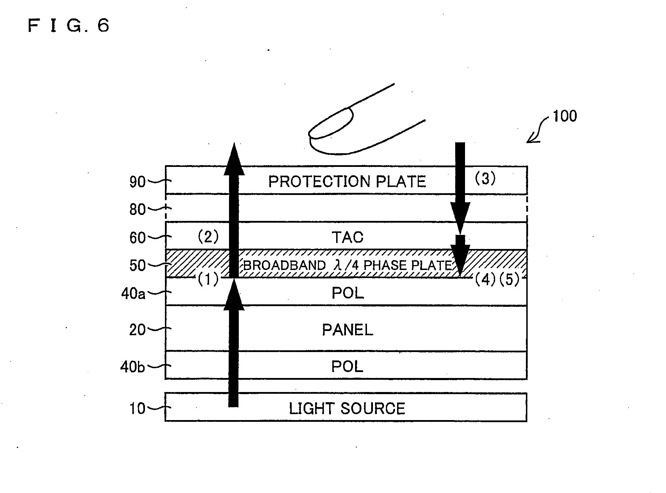

   Fig. 6 schematically illustrates how reflected light is blocked by a combination of a polarizing plate and a λ/4 phase plate in the liquid crystal display device illustrated in Fig. 1.
Fig. 7
   (a) of Fig. 7 illustrates an example of an image displayed in the liquid crystal display device illustrated in Fig. 1. (b) of Fig. 7 illustrates an image recognized by a light sensor element when the image illustrated in (a) of Fig. 7 is displayed in the liquid crystal display device of the comparative embodiment provided with no broadband λ/4 phase plate. (c) of Fig. 7 illustrates an image recognized by a light sensor element when the image illustrated in (a) of Fig. 7 is displayed in the liquid crystal display device of the present invention provided with a broadband λ/4 phase plate.
Fig. 8

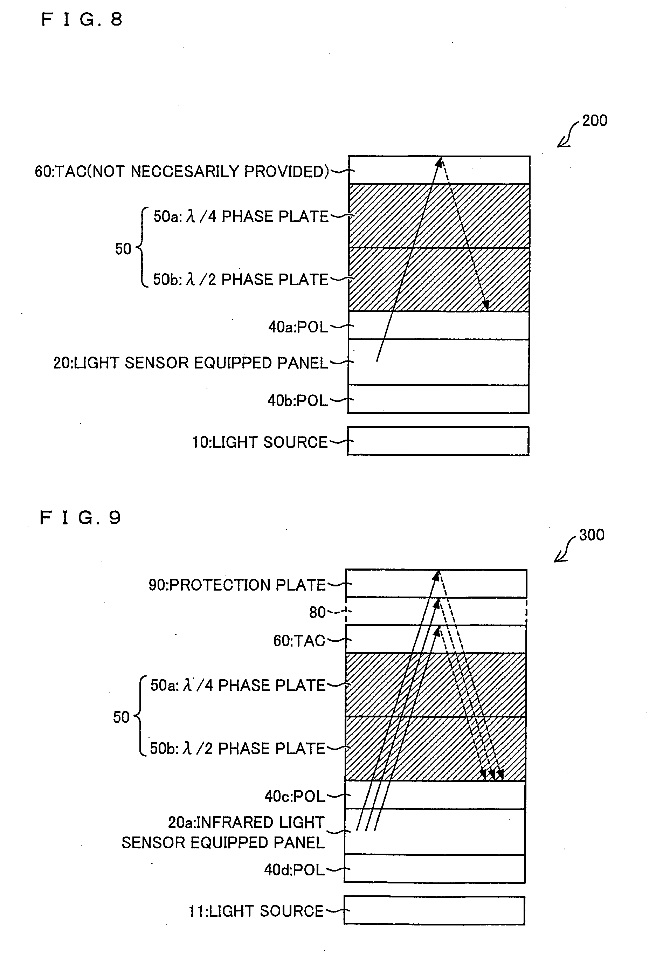

   Fig. 8 schematically illustrates a modification of the liquid crystal display device illustrated in Fig. 1.
Fig. 9

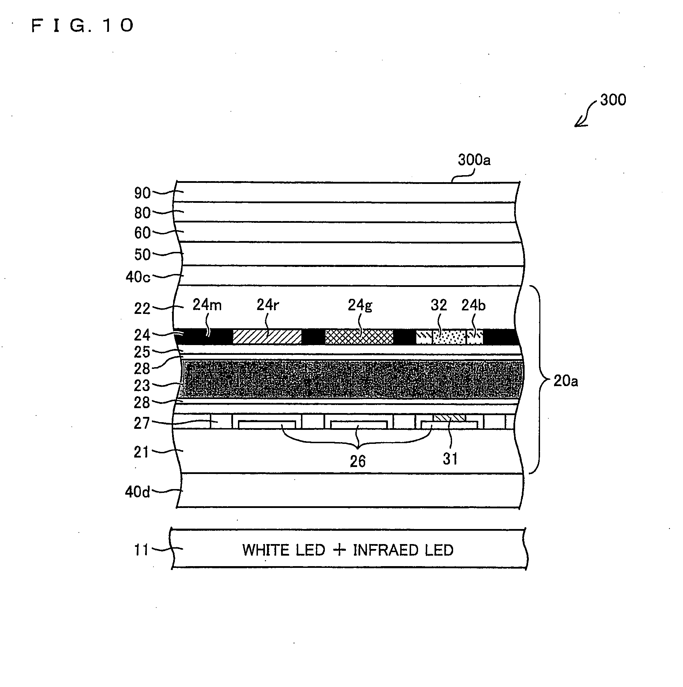

   Fig. 9 schematically illustrates (i) an overall arrangement of a liquid crystal display device illustrated in Fig. 10 and (ii) optical paths in each of which reflected light passes through boundary surfaces in the liquid crystal display device.
Fig. 10
   Fig. 10 is a cross-sectional view illustrating an arrangement of a liquid crystal display device in accordance with a second embodiment of the present invention.
Fig. 11

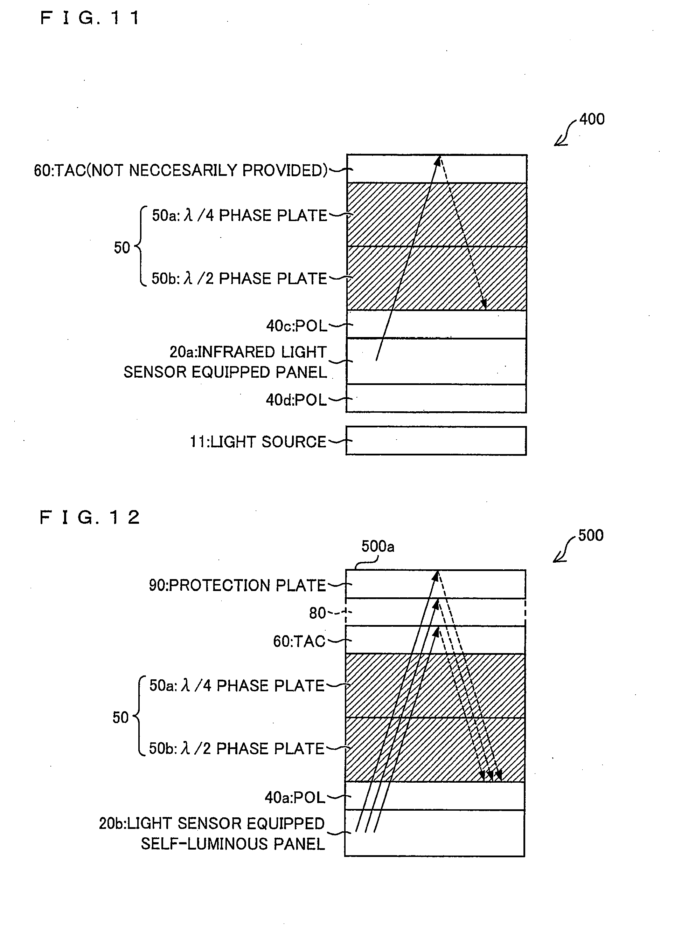

   Fig. 11 schematically illustrates a modification of the liquid crystal display device illustrated in Fig. 9.
Fig. 12
   Fig. 12 schematically illustrates (i) an overall arrangement of a self-luminous display device in accordance with a third embodiment of the present invention and (ii) optical paths in each of which reflected light passes through boundary surfaces in the liquid crystal display device.
Fig. 13

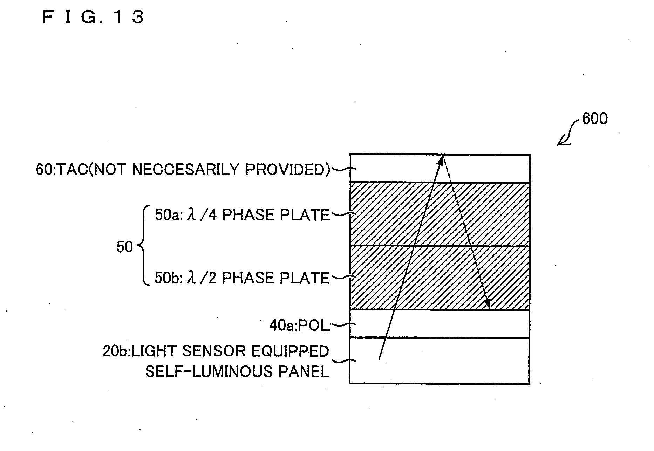

   Fig. 13 schematically illustrates a modification of the self-luminous display device illustrated in Fig. 12.

### Description of Embodiments

### [First Embodiment]

An embodiment of the present invention is described below with reference to Figs. 1 through 8. Note that the present invention is not limited to this.

The present embodiment discusses a touch panel integrated liquid crystal display device which has an area sensor function (specifically, a touch panel function).

An arrangement of the touch panel integrated liquid crystal display device of the present embodiment is described below with reference to Fig. 2. A touch panel integrated liquid crystal display device 100 (also simply referred to as a liquid crystal display device 100) illustrated in Fig. 2 has a touch panel function in which a plurality of light sensor elements which are two-dimensionally provided detect an image on a device top surface, so as to determine an input location.

The touch panel integrated liquid crystal display device 100 of the present embodiment includes a liquid crystal panel 20 and a backlight 10 which is provided on a backside of the liquid crystal panel 20 and emits light toward the liquid crystal panel 20 (see Fig. 2).

The backlight 10 includes a plurality of white LEDs as a light source.

The liquid crystal panel 20 includes (i) an active matrix substrate 21 in which many pixels are provided in a matrix pattern, (ii) a counter substrate 22 which is provided to face the active matrix substrate 21, and (iii) a liquid crystal layer 23 which is provided between the active matrix substrate 21 and the counter substrate 22 and serves as a display medium. Note that a mode in which the liquid crystal panel 20 carries out a display is not particularly limited in the present embodiment and various display modes such as a TN mode, an IPS mode, and a VA mode are applicable.

A front side polarizing plate 40a (a polarizing plate provided on an image display surface side) and a backside polarizing plate 40b are provided outside the liquid crystal panel 20 so that the liquid crystal panel 20 is sandwiched between the front side polarizing plate 40a and the backside polarizing plate 40b.

Each of the front side polarizing plate 40a and the backside polarizing plate 40b serves as a polarizer. For example, in a case where a vertical alignment liquid crystal material is encapsulated in the liquid crystal layer 23, a normally black liquid crystal display device can be made by providing the front side polarizing plate 40a and the backside polarizing plate 40b so that their respective directions of polarization are in a crossed Nicols relationship.

A broadband λ/4 phase plate 50 is provided on the front side polarizing plate 40a. A TAC film 60 is provided on the broadband λ/4 phase plate 50. A top surface 100a (i.e., a surface 100a to be detected) of the liquid crystal display device 100 is provided with a protection plate 90. The TAC film 60 and the protection plate 90 are spaced at a given distance. This forms an air layer 80 between the TAC film 60 and the protection plate 90.

The active matrix substrate 21 mainly includes TFTs (not illustrated) serving as switching elements to drive respective pixels, an alignment film (not illustrated), and light sensor elements 30.

The counter substrate 22 mainly includes a color filter layer 24, a counter electrode (not illustrated), and an alignment film (not illustrated). The color filter layer includes (i) red (R), green (G), and blue (B) colored sections and (ii) a black matrix.

As described earlier, the touch panel integrated liquid crystal display device 100 of the present embodiment includes the light sensor elements 30 provided in respective pixel regions. This allows implementation of an area sensor function. In a case where a specific part of the top surface (the surface 100a to be detected) of the liquid crystal display device 100 is touched with a finger or an input pen, the area sensor function allows the light sensor elements 30 to read the specific part, so as to supply information to the liquid crystal display device 100 and cause an intended operation to be carried out. The liquid crystal display device 100 of the present embodiment thus allows the light sensor elements 30 to implement a touch panel function.

The light sensor elements 30 are made of a photodiode or a phototransistor and detect a received light amount by a flow of an electric current in accordance with an intensity of received light. The TFTs and the light sensor elements 30 can be monolithically formed on the active matrix substrate 21 by a substantially identical process. Namely, a part of members of which the light sensor elements 30 are made can be formed simultaneously with a part of members of which the TFTs are made. Such a method for forming a light sensor element can be carried out in conformity with a conventionally publicly known method for producing a light sensor equipped liquid crystal display device.

Note that according to the present invention, a light sensor element is not necessarily provided for each pixel. For example, a light sensor can be provided for each pixel having any one of R, G, and B color filters.

The TAC film 60 is such that, in a case where three principal refractive indices in x, y, and z-axis directions which are orthogonal to each other are nx, ny, and nz, nx, ny, and nz has a relationship of nx = ny > nz, and a retardation value given by |nx - nz| · d is generally not less than 50 nm and not more than 60 nm.

The protection plate 90 constitutes the top surface of the liquid crystal display device 100 which top surface is on the image display surface side and protects the liquid crystal display device 100. The protection plate 90 is made of a transparent material such as acryl, polycarbonate, or PET.

The air layer 80 provided between the TAC film 60 and the protection plate 90 is formed by, for example, causing a transparent pressure sensitive adhesive double coated film sheet or the like to fix the TAC film 60 and the protection plate 90 so that the TAC film 60 and the protection plate 90 are spaced at a given distance.

The liquid crystal display device 100 further includes a liquid crystal drive circuit (not illustrated in Fig. 2) which drives the liquid crystal panel 20 to carry out a display and an area sensor control section (not illustrated in Fig. 2) for driving an area sensor. Note that the liquid crystal drive circuit and the area sensor control section of the present embodiment can be arranged by a conventionally publicly known method.

Since the liquid crystal display device 100 is arranged as described above, in a case where the top surface (the surface 100a to be detected) of the liquid crystal display device 100 is touched with a finger or an input pen, the light sensor elements 30 provided in the liquid crystal panel 20 can determine an input location by recognizing the finger or the input pen as an image.

Since the liquid crystal display device 100 of the present embodiment includes the broadband λ/4 phase plate 50 which is provided on the front side polarizing plate 40a, the liquid crystal display device 100 can prevent the light sensor elements 30 from detecting a reflected light component of light coming from a display image which contains light having various wavelengths. This allows determination of an input location with high accuracy. The following description discusses this point.

Fig. 1 schematically illustrates an arrangement of each layer of the liquid crystal display device 100.

The broadband λ/4 phase plate 50 includes a λ/2 phase plate 50b and a λ/4 phase plate 50a which are stacked in this order from the front side polarizing plate 40a side (see Fig. 1). The λ/2 phase plate causes a state of polarization of light transmitted therethrough to change by a wavelength of λ/2, and is simply referred to as a λ/2 plate. The λ/4 phase plate causes a state of polarization of light transmitted therethrough to change by a wavelength of λ/4, and is simply referred to as a λ/4 plate.

Fig. 3 illustrates a comparison between (i) an arrangement of the present invention (see (a) of Fig. 3) in which the broadband λ/4 phase plate 50 is provided and (ii) an arrangement of a comparative embodiment (see (b) of Fig. 3) in which no broadband λ/4 phase plate 50 is provided.

According to each of the liquid crystal display device 100 and a liquid crystal display device 101, light emitted from the light source provided in the backlight 10 is transmitted through the liquid crystal panel 20, so that a display image is formed. A part of light coming from the display image glares in the top surface 100a of the liquid crystal display device 100 or a top surface 101 a of the liquid crystal display device 101, a boundary surface between the protection plate 90 and the air layer 80, a boundary surface between the air layer 80 and the TAC film 60, and a finger.

According to the liquid crystal display device 101 (see (b) of Fig. 3) provided with no broadband λ/4 phase plate 50, the glaring image, which is reflected and then goes back to inside the liquid crystal panel 20, is detected by the light sensor elements 30 provided in the liquid crystal panel 20. This causes the light sensor elements 30 to detect an image in accordance with the display image. This causes a deterioration in accuracy with which an input location is detected.

In contrast, according to the liquid crystal display device 100 (see (a) of Fig. 3) provided with the broadband λ/4 phase plate 50, much of light reflected from each of the boundary surfaces in the liquid crystal display device 100 and the finger cannot pass through the front side polarizing plate 40a. This can prevent the light sensor elements 30 from detecting light reflected from the display image.

A principle is described here that provision of the λ/4 phase plate 50 can block reflected light.

First, the following description discusses, with reference to Fig. 4, a principle that the λ/4 phase plate 50a provided in the broadband λ/4 phase plate 50 blocks reflected light having a wavelength of 550 nm. Note here that a positional relationship between a transmission axis of a polarizing plate and an optical axis (a slow axis) of a λ/4 phase plate is to be explained with reference to coordinate axes illustrated in (a) of Fig. 5. Note also that the following explanation is given with reference to what is disclosed in Non Patent Literature 1.

A transmission axis of a polarizing plate extends in an x-axis direction (see Fig. 4). (1) through (5) of Fig. 4 sequentially illustrate how light which has entered polarizing plate is reflected and then goes back toward the polarizing plate. The following description is given in this order.
(1) After passing through the polarizing plate, light from a display panel becomes light which is linearly polarized in the x-axis direction.
(2) After passing through the λ/4 phase plate, the linearly polarized light (1) becomes right-handed circularly polarized light.
(3) After being reflected by a top surface of a liquid crystal display device, a finger, or the like, the right-handed circularly polarized light (2) becomes left-handed circularly polarized light.
(4) After passing through the λ/4 phase plate, the reflected left-handed circularly polarized light (3) becomes light which is linearly polarized in a y-axis direction.
(5) The linearly polarized light (4), which is polarized in a direction that is orthogonal to the transmission axis (x-axis direction) of the polarizing plate, cannot pass through the polarizing plate.

As described above, the reflected light cannot enter the display panel from the polarizing plate . This can prevent a light sensor element from detecting the reflected light. Note that it is only regularly reflected light but not scattering reflected light that the polarizing plate blocks in accordance with the above principle.

In a case where the reflected light has only a regular reflection component and the transmission axis of the polarizing plate and the optical axis (slow axis) of the λ/4 phase plate intersect with each other at an angle of 45°, the linearly polarized light (4) is polarized in the direction which is orthogonal to the transmission axis (x-axis direction) of the polarizing plate, so that the reflected light is completely blocked by the polarizing plate. As the transmission axis of the polarizing plate and the optical axis (slow axis) of the λ/4 phase plate intersect with each other at an angle greater or less than 45°, the reflected light is less blocked.

As described earlier, in order to obtain a higher effect of blocking the reflected light, it is preferable to cause an angle at which the transmission axis of the polarizing plate and the optical axis (slow axis) of the λ/4 phase plate intersect with each other to be closer to 45°. However, the present invention is not limited to this. An effect of reducing the reflected light can be obtained to some extent, provided that the slow axis of the λ/4 phase plate inclines toward the transmission axis of the polarizing plate to some extent (namely, the slow axis and the transmission axis is not parallel to each other) and the slow axis and the transmission axis are not orthogonal to each other.

As described earlier, it is only regularly reflected light but not scattering reflected light that the polarizing plate blocks. Of light reflected from each of the boundary surfaces in the liquid crystal display device and the finger, much of the light reflected from the finger is scattering reflected light. This causes the polarizing plate to yield a comparatively small effect of reducing the reflected light. In contrast, much of the light reflected by each of the boundary surfaces in the liquid crystal display device is light having a regular reflection component. This causes the polarizing plate to yield a great effect of reducing the reflected light.

As described earlier, according to the arrangement in which only the λ/4 phase plate 50a is provided on the front side polarizing plate 40a, light having a wavelength of 550 nm is converted to circularly polarized light by the λ/4 phase plate 50a and light having a wavelength other than 550 nm becomes elliptically polarized light. Therefore, the arrangement in which only the λ/4 phase plate 50a is provided yields less effect of removing reflected light for light having a wavelength other than 550 nm.

In view of the circumstances, the liquid crystal display device 100 of the present embodiment is arranged such that the λ/2 phase plate 50b is provided between the front side polarizing plate 40a and the λ/4 phase plate 50a so that an optical axis (a slow axis) of the λ/2 phase plate 50b and an optical axis (a slow axis) of the λ/4 phase plate 50a intersect with each other. According to this, also for light having a wavelength other than 550 nm, linearly polarized light can be converted to circularly polarized light.

Further, for light having a broader band wavelength, linearly polarized light can be converted to circularly polarized light by providing the λ/4 phase plate and the λ/2 phase plate so that the optical axis (slow axis) of the λ/4 phase plate the optical axis (slow axis) of the λ/2 phase plate have a given positional relationship. The following description discusses a preferable positional relationship.

In order to explain a positional relationship, the coordinate axes are defined as illustrated in (a) of Fig. 5. In the coordinate axes illustrated in (a) of Fig. 5, the polarizing plate, the λ/4 phase plate, and the λ/2 phase plate are provided along an x-y plane and a ray of light travels along a z-axis. Namely, an x-axis and a y-axis are in-plane orthogonal axes in each of the polarizing plate, the λ/4 phase plate, and the λ/2 phase plate, and the z-axis extends in a thickness direction of each of the polarizing plate, the λ/4 phase plate, and the λ/2 phase plate. Directions in which an optical axis (a slow axis) of the polarizing plate and the respective optical axes (slow axes) of the λ/4 phase plate and the λ/2 phase plate extends are defined by angles θ obtained assuming that a rightward direction from the y-axis is positive in the x-y plane (see (b) of Fig. 5). Namely, a positive direction of the y-axis is defined as 0°, and a positive direction of the x-axis is defined as 90°.

Assume that the λ/4 phase plate 50a, the λ/2 phase plate 50b, and the front side polarizing plate 40a are provided in this order in an arrow direction of the z-axis (see (a) of Fig. 5) (i.e., a direction from left to right in (a) of Fig. 5). In this case, the λ/4 phase plate 50a, the λ/2 phase plate 50b, and the front side polarizing plate 40a are provided so that in (b) of Fig. 5, the optical axis of the λ/4 phase plate 50a has the angle θ of 20°, the optical axis of the λ/2 phase plate 50b has the angle θ of 75°, and the optical axis of the front side polarizing plate 40a has the angle θ of 90° (namely, is in the x-axis direction).

In a case where the λ/4 phase plate 50a, the λ/2 phase plate 50b, and the front side polarizing plate 40a are provided in such a positional relationship as described earlier, linearly polarized light having gone out of the front side polarizing plate 40a passes through the λ/2 phase plate 50b, so as to be subjected to conversion that varies with each wavelength. Then, the resulting light enters the λ/4 phase plate 50a. This causes light having a broadband wavelength (specifically, visible light having a wavelength of not less than 400 nm and not more than 700 nm) and having passed through the λ/4 phase plate 50a to be converted to circularly polarized light.

Therefore, according to the arrangement, a liquid crystal display device can be obtained which (i) prevents a reflection of light coming from a display image that contains light having various wavelengths and (ii) allows determination of an input location with higher accuracy.

Note that a positional relationship between the optical axis (slow axis) of the λ/4 phase plate and the optical axis (slow axis) of the λ/2 phase plate is not limited to the positional relationship described above. Alternatively, for example, the optical axis (slow axis) of the λ/4 phase plate the optical axis (slow axis) of the λ/2 phase plate can be provided in a positional relationship described below with reference to the technique disclosed in Patent Literature 3.

Namely, it is preferable that the λ/2 phase plate and the λ/4 phase plate be provided so that their respective optical axes (slow axes) intersect with each other at an angle p falling within a range of 50° < p < 70°.

According to the arrangement, of light which has passed through the front side polarizing plate 40a and then enters the λ/2 phase plate 50b and the λ/4 phase plate 50a, not only light having a wavelength of 550 nm but also light having a broadband wavelength can become circularly polarized light.

Therefore, according to the arrangement, a liquid crystal display device can be obtained which (i) prevents a reflection of light coming from a display image that contains light having various wavelengths and (ii) allows determination of an input location with higher accuracy.

With reference to Patent Literature 3, it is preferable that (i) the λ/4 phase plate and the λ/2 phase plate be made of a single material and (ii) in a case where respective refractive indices along orthogonal axes in a phase plate plane are nx and ny and a refractive index in a phase plate thickness direction is nz in at least one of the λ/2 phase plate and the λ/4 phase plate, nx, ny, and nz satisfy a relationship of nx > ny and (nx - nz) < (nx - ny) (or (nx - nz) / (nx - ny) < 1). Note here that the refractive indices nx, ny, and nz can also be referred to as refractive indices in directions corresponding to the respective coordinate axes (x-axis, y-axis, and z-axis) illustrated in (a) of Fig. 5.

According to the arrangement, of light which has passed through the front side polarizing plate 40a and then enters the λ/2 phase plate 50b and the λ/4 phase plate 50a, not only light having a wavelength of 550 nm but also light having a broadband wavelength can become circularly polarized light.

Therefore, according to the arrangement, a liquid crystal display device can be obtained which (i) prevents a reflection of light coming from a display image that contains light having various wavelengths and (ii) allows determination of an input location with higher accuracy.

Since the liquid crystal display device 100 of the present embodiment is arranged as described above, (a regular reflection component of) light of a display image which light is reflected by each of the boundary surfaces in the liquid crystal display device 100, a finger, and the like can be blocked by the front side polarizing plate 40a and prevented from going back to the liquid crystal panel 20 (see Fig. 6). Note that (1) through (5) in Fig. 6 correspond to (1) through (5) in Fig. 4.

Fig. 7 illustrates an example of an effect obtained in a case where the liquid crystal display device 100 is provided with the broadband λ/4 phase plate 50. (a) of Fig. 7 illustrates an example of an image (specifically, an image of a map) displayed in the liquid crystal display device 100. (c) of Fig. 7 illustrates an image recognized by a light sensor element when the image illustrated in (a) of Fig. 7 is displayed in the liquid crystal display device 100. For comparison, (b) of Fig. 7 illustrates an image recognized by a light sensor element when the image illustrated in (a) of Fig. 7 is displayed in a liquid crystal display device provided with no broadband λ/4 phase plate. Note that sensor images illustrated in (b) and (c) of Fig. 7 are obtained in a case where device top surfaces are not at all touched with a finger or the like.

According to the arrangement in which no broadband λ/4 phase plate is provided, the image of the map which image is displayed on the liquid crystal panel is reflected in the sensor image (see (b) of Fig. 7). Therefore, for example, a light sensor value of a part corresponding to a road on the map increases to 100/256 gray scale though the surface of the liquid crystal display device is not touched with a finger. This may cause incorrect recognition that the surface of the liquid crystal display device is touched with a finger.

In contrast, according to the arrangement in which no broadband λ/4 phase plate is provided, a light sensor value of an entire display region of the liquid crystal panel is hardly influenced by an image displayed on the liquid crystal panel and is approximately 17/256 gray scale (see (c) of Fig. 7). Since a light sensor value obtained in a case where the surface of the liquid crystal display device is touched with a finger is approximately 100/256 gray scale which is not less than 17/256 gray scale, incorrect recognition due to an influence of a display image can be prevented.

The following description discusses a modification of the liquid crystal display device of the present embodiment. Fig. 8 illustrates an overall arrangement of a liquid crystal display device 200 which is a modification of the liquid crystal display device 100 illustrated in Fig. 1. The liquid crystal display device 200 is provided with no air layer 80 and no protection plate 90 as shown by a comparison between Figs. 1 and 8. A TAC film 60 illustrated in Fig. 8 does not need to be provided. An arrangement other than the above is identical to that of the liquid crystal display device 100.

Since the liquid crystal display device 200 is also provided with a broadband λ/4 phase plate 50, light which is reflected by a device top surface and comes from a display image cannot pass through a front side polarizing plate 40a. This can prevent a reduction in detection sensitivity of a light sensor element due to an influence of reflected light from an input object.

However, a comparison between the liquid crystal display device 100 and the liquid crystal display device 200 shows that the liquid crystal display device 100 yields a greater effect of the present invention than the liquid crystal display device 200. This is because a boundary surface by which a display image may be reflected in a display device is only a device top surface according to the liquid crystal display device 200, whereas a display image may be reflected by three boundary surfaces (specifically (i) a boundary surface between the TAC film 60 and the air layer 80, (ii) a boundary surface between the air layer 80 and the protection plate 90, and (iii) a boundary surface between the protection plate 90 and an air layer (i.e., the device top surface 100a)) according to the liquid crystal display device 100.

As described earlier, the liquid crystal display device 100 having more boundary surfaces causes an increase in amount of reflected light from a display image, so that incorrect recognition by a light sensor due to reflected light is more likely to occur. Therefore, the liquid crystal display device 100 yields a greater effect of removing reflected light by providing the broadband λ/4 phase plate 50 than the liquid crystal display device 200.

The liquid crystal display device 100 can be provided with a transparent resin layer instead of the air layer 80. However, the liquid crystal display device 100 provided with the air layer 80 causes (i) a larger difference in refractive index between the boundary surfaces and (ii) an increase in amount of light reflected by each of the boundary surfaces. Therefore, the liquid crystal display device 100 provided with the air layer 80 yields a greater effect of reducing reflected light by providing the broadband λ/4 phase plate 50 than the liquid crystal display device 100 provided with the transparent resin layer.

### [Second Embodiment]

A second embodiment of the present invention is described below. According to the present embodiment, a backlight includes an infrared light source. The present embodiment discusses a touch panel integrated liquid crystal display device which causes a light sensor element to detect infrared light, so as to detect an input location.

Fig. 10 illustrates an arrangement of a touch panel integrated liquid crystal display device 300 of the present embodiment. The touch panel integrated liquid crystal display device 300 (also simply referred to as a liquid crystal display device 300) illustrated in Fig. 10 has a touch panel function in which a plurality of light sensor elements which are two-dimensionally provided detect an image on a device top surface 300a (a surface to be detected), so as to determine an input location. Note that for convenience, members having arrangements and functions identical to those of the respective members of the liquid crystal display device 100 of the First Embodiment are given respective identical reference numerals, and a description of those arrangements and members of the liquid crystal display device 300 is omitted here.

The touch panel integrated liquid crystal display device 300 of the present embodiment includes a liquid crystal panel 20a and a backlight 11 which is provided on a backside of the liquid crystal panel 20a and emits light toward the liquid crystal panel 20a (see Fig. 10). The liquid crystal panel 20a is an infrared light sensor equipped liquid crystal panel.

The backlight 11 includes a plurality of white LEDs and a plurality of infrared LEDs as a light source. Note that an infrared LED emits infrared wavelength light. The present embodiment particularly uses an infrared LED which emits infrared wavelength light that passes through an infrared light transmitting filter (infrared light transmitting section) 32 provided in the liquid crystal panel 20a.

The liquid crystal panel 20a includes (i) an active matrix substrate 21 in which many pixels are provided in a matrix pattern, (ii) a counter substrate 22 which is provided to face the active matrix substrate 21, and (iii) a liquid crystal layer 23 which is provided between the active matrix substrate 21 and the counter substrate 22 and serves as a display medium.

A front side polarizing plate 40c (a polarizing plate provided on an image display surface side) and a backside polarizing plate 40d are provided outside the liquid crystal panel 20a so that the liquid crystal panel 20a is sandwiched between the front side polarizing plate 40c and the backside polarizing plate 40d.

A broadband λ/4 phase plate 50 is provided on the front side polarizing plate 40c. A TAC film 60 is provided on the broadband λ/4 phase plate 50. The top surface 300a (i.e., the surface 300a to be detected) of the liquid crystal display device 300 is provided with a protection plate 90. The TAC film 60 and the protection plate 90 are spaced at a given distance. This forms an air layer 80 between the TAC film 60 and the protection plate 90.

The active matrix substrate 21 mainly includes TFTs (not illustrated) serving as switching elements to drive respective pixels, pixel electrodes 26, data signal lines 27, an alignment film 28, and light sensor elements 31.

The light sensor elements 31 are made of a photodiode or a phototransistor, and detect a received light amount by a flow of an electric current in accordance with an intensity of received light. According to the present embodiment, a light sensor element 31 is provided in a vicinity of a picture electrode 26 which corresponds to a blue colored section 24b of a color filter layer 24. An infrared light transmitting filter 32 is provided in the blue colored section 24b. This causes light from the device top surface 300a to pass through the infrared light transmitting filter 32, so as to reach the light sensor element 31.

The infrared light transmitting filter 32 selectively transmits infrared light. Note that the infrared light transmitting filter 32 does not necessarily need to completely block visible light, provided that the infrared light transmitting filter 32 is provided to transmit infrared light and block visible light. Alternatively, an infrared light transmitting filter which transmits, for example, approximately several ten percent of visible light can be used as the infrared light transmitting filter 32. Since the infrared light transmitting filter 32 is provided above the light sensor element 31, the light sensor element 31 serves as an infrared light sensor to detect an amount of infrared light.

The counter substrate 22 mainly includes the color filter layer 24, a counter electrode 25, and an alignment film 28. The color filter layer includes (i) red (R), green (G), and blue (B) colored sections 24r, 24g, and 24b and (ii) a black matrix 24m.

The TAC film 60, the air layer 80, and the protection plate 90 which are provided in the liquid crystal display device 100 are usable as the TAC film 60, the air layer 80, and the protection plate 90, respectively of the liquid crystal display device 300.

Since the liquid crystal display device 300 is arranged as described above, in a case where the surface 300a to be detected is touched with an object such as a finger or an input pen, the light sensor elements 31 can detect infrared light which has been emitted from the plurality of infrared LEDs provided in the backlight 11 and then reflected by the object. This makes it possible to determine, in accordance with an intensity of the infrared light detected by the light sensor elements 31, which part of the surface to be detected is touched with the object.

Since the liquid crystal display device 300 includes the broadband λ/4 phase plate 50, as in the case of the liquid crystal display device 100, a display device can be obtained which (i) prevents a reflection of light coming from a display image and (ii) allows determination of an input location with high accuracy. The following description discusses this point with reference to Fig. 9.

The broadband λ/4 phase plate 50 includes a λ/2 phase plate 50b and a λ/4 phase plate 50a which are stacked in this order from the front side polarizing plate 40a side (see Fig. 9). This arrangement is identical to that of the liquid crystal display device 100.

In contrast, the liquid crystal display device 300 which includes the infrared light sensor equipped liquid crystal panel 20a is partially different from the liquid crystal display device 100 in respective arrangements of the front side polarizing plate 40c and the backside polarizing plate 40d.

Namely, each of the front side polarizing plate 40a and the backside polarizing plate 40b which are provided in the liquid crystal display device 100 is a polarizing plate which is generally used in a liquid crystal panel, and causes light having a wavelength in a visible light region to be linearly polarized light but does not polarize light having a wavelength in an infrared region. In contrast, a polarizing plate which causes infrared light to be linearly polarized light is used as the front side polarizing plate 40c provided in the liquid crystal display device 300 of the present embodiment, and a polarizing plate which does not polarize infrared light is used as the backside polarizing plate 40d provided in the liquid crystal display device 300 of the present embodiment. Note that both the front side polarizing plate 40c and the backside polarizing plate 40d cause visible light to be linearly polarized light.

In a case where the polarizing plates described above are used, infrared light emitted from an infrared LED can go out of the device top surface 300a, and the front side polarizing plate 40c can block infrared light reflected by the device top surface 300a, and the like.

Note that the front side polarizing plate 40c and the backside polarizing plate 40d which have respective characteristics described above are both commercially available and are appropriately obtainable according to need.

This allows the front side polarizing plate 40c to block infrared light which has been emitted from an infrared LED and then reflected by the device top surface 300a, a boundary surface between the protection plate 90 and the air layer 80, and a boundary surface between the air layer 80 and the TAC film 60. Note that, since much of light reflected from an input object such as a finger with which the device top surface 300a is touched has a scattering light component, the front side polarizing plate 40c is less likely to block the light. This allows the light sensor elements 31 to detect the light.

The following description discusses a modification of the liquid crystal display device of the present embodiment. Fig. 11 illustrates an overall arrangement of a liquid crystal display device 400 which is a modification of the liquid crystal display device 300 illustrated in Fig. 9. The liquid crystal display device 400 is provided with no air layer 80 and no protection plate 90 as shown by a comparison between Figs. 9 and 11. A TAC film 60 illustrated in Fig. 11 does not need to be provided. An arrangement other than the above is identical to that of the liquid crystal display device 300.

Since the liquid crystal display device 400 is also provided with a broadband λ/4 phase plate 50, light which is reflected by a device top surface and comes from a display image cannot pass through a front side polarizing plate 40a. This can prevent a reduction in detection sensitivity of a light sensor element due to an influence of reflected light from an input object.

However, a comparison between the liquid crystal display device 300 and the liquid crystal display device 400 shows that the liquid crystal display device 300 yields a greater effect of the present invention than the liquid crystal display device 400. This is because a boundary surface by which a display image may be reflected in a display device is only a device top surface according to the liquid crystal display device 400, whereas a display image may be reflected by three boundary surfaces (specifically (i) a boundary surface between the TAC film 60 and the air layer 80, (ii) a boundary surface between the air layer 80 and the protection plate 90, and (iii) a boundary surface between the protection plate 90 and an air layer (i.e., the device top surface 300a)) according to the liquid crystal display device 300.

As described earlier, the liquid crystal display device 300 having more boundary surfaces causes an increase in amount of reflected light from a display image, so that incorrect recognition by a light sensor due to reflected light is more likely to occur. Therefore, the liquid crystal display device 300 yields a greater effect of removing reflected light by providing the broadband λ/4 phase plate 50 than the liquid crystal display device 400.

### [Third Embodiment]

A third embodiment of the present invention is described below. The present embodiment discusses a touch panel integrated self-luminous display device having an area sensor function (specifically, a touch panel function).

Fig. 12 illustrates an arrangement of a self-luminous touch panel integrated liquid crystal display device 500 of the present embodiment. The touch panel integrated liquid crystal display device 500 (also simply referred to as a self-luminous liquid crystal display device 500) illustrated in Fig. 12 has a touch panel function in which a plurality of light sensor elements which are two-dimensionally provided detect an image on a device top surface 500a (a surface to be detected), so as to determine an input location. Note that for convenience, members having arrangements and functions identical to those of the respective members of the liquid crystal display device 100 of the First Embodiment are given respective identical reference numerals, and a description of those arrangements and members of the self-luminous liquid crystal display device 500 is omitted here.

The self-luminous liquid crystal display device 500 of the present embodiment includes a self-luminous panel 20b (see Fig. 12). The self-luminous panel 20b is a self-luminous display panel such as a plasma display panel (PDP) or an organic EL panel.

The self-luminous panel 20b is provided with not only members constituting each pixel for displaying an image but also the plurality of light sensor elements for implementing the touch panel function. For example, the arrangement disclosed in Patent Literature 4 is applicable to such an arrangement in which a self-luminous display panel is provided with a light sensor element.

A front side polarizing plate 40a (a polarizing plate provided on an image display surface side) is provided on the self-luminous panel 20b. A broadband λ/4 phase plate 50 is provided on the front side polarizing plate 40a. The broadband λ/4 phase plate 50 includes a λ/2 phase plate 50b and a λ/4 phase plate 50a which are stacked in this order from the front side polarizing plate 40a side.

A TAC film 60 is provided on the broadband λ/4 phase plate 50. The top surface 500a (i.e., the surface 500a to be detected) of the self-luminous liquid crystal display device 500 is provided with a protection plate 90. The TAC film 60 and the protection plate 90 are spaced at a given distance. This forms an air layer 80 between the TAC film 60 and the protection plate 90.

The front side polarizing plate 40a, the TAC film 60, the air layer 80, and the protection plate 90 which are provided in the liquid crystal display device 100 are usable as the front side polarizing plate 40a, the TAC film 60, the air layer 80, and the protection plate 90, respectively of the self-luminous liquid crystal display device 500.

Since the self-luminous liquid crystal display device 500 is arranged as described above, in a case where the surface 500a to be detected is touched with a finger, an input pen, or the like, the plurality of light sensor elements provided in the self-luminous panel 20b can determine an input location by recognizing the finger or the input pen as an image.

Since the self-luminous liquid crystal display device 500 is provided with the broadband λ/4 phase plate 50, much of light reflected from each of boundary surfaces in the self-luminous liquid crystal display device 500 and a finger cannot pass through the front side polarizing plate 40a. This can prevent the plurality of light sensor elements from detecting light reflected from a display image. This makes it possible to obtain a display device which allows determination of an input location with high accuracy.

The following description discusses a modification of the display device of the present embodiment. Fig. 13 illustrates an overall arrangement of a self-luminous liquid crystal display device 600 which is a modification of the self-luminous liquid crystal display device 500 illustrated in Fig. 12. The self-luminous liquid crystal display device 600 is provided with no air layer 80 and no protection plate 90 as shown by a comparison between Figs. 12 and 13. A TAC film 60 illustrated in Fig. 13 does not need to be provided. An arrangement other than the above is identical to that of the self-luminous liquid crystal display device 500.

Since the self-luminous liquid crystal display device 600 is also provided with a broadband λ/4 phase plate 50, light which is reflected by a device top surface and comes from a display image cannot pass through a front side polarizing plate 40a. This can prevent a reduction in detection sensitivity of a light sensor element due to an influence of reflected light from an input object.

However, a comparison between the self-luminous liquid crystal display device 500 and the self-luminous liquid crystal display device 600 shows that the self-luminous liquid crystal display device 500 yields a greater effect of the present invention than the self-luminous liquid crystal display device 600. This is because a boundary surface by which a display image may be reflected in a display device is only a device top surface according to the self-luminous liquid crystal display device 600, whereas a display image may be reflected by three boundary surfaces (specifically (i) a boundary surface between the TAC film 60 and the air layer 80, (ii) a boundary surface between the air layer 80 and the protection plate 90, and (iii) a boundary surface between the protection plate 90 and an air layer (i.e., the device top surface 300a)) according to the self-luminous liquid crystal display device 500.

As described earlier, the self-luminous liquid crystal display device 500 having more boundary surfaces causes an increase in amount of reflected light from a display image, so that incorrect recognition by a light sensor due to reflected light is more likely to occur. Therefore, the self-luminous liquid crystal display device 500 yields a greater effect of removing reflected light by providing the broadband λ/4 phase plate 50 than the self-luminous liquid crystal display device 600.

In order to attain the object, a display device in accordance with the present invention including a display panel provided with a plurality of light sensor elements, and having an area sensor function in which the plurality of light sensor elements detect an image on a surface of the display device, so as to determine a location of an input from outside, the display device includes: a polarizing plate provided on or above a surface of the display panel which surface is on an image display surface side; and a λ/4 phase plate provided on or above a surface of the polarizing plate which surface is on the image display surface side.

Note here that "the surface of the polarizing plate which surface is on the image display surface side" refers to a surface of the polarizing plate on which surface no display panel is provided and which surface is located between the image display surface and the display panel.

According to the arrangement, since the display device includes the λ/4 phase plate provided on or above the polarizing plate, light coming from an image displayed on the display panel and being reflected by, for example, the surface of the display device can be blocked in accordance with the following principle.
(1) After passing through the polarizing plate, light from the display panel becomes linearly polarized light (e.g., light which is linearly polarized in a horizontal direction).
(2) After passing through the λ/4 phase plate, the linearly polarized light (1) becomes right-handed circularly polarized light.
(3) After being reflected by the surface of the display device, a finger, or the like, the right-handed circularly polarized light (2) becomes left-handed circularly polarized light.
(4) After passing through the λ/4 phase plate, the reflected left-handed circularly polarized light (3) becomes linearly polarized light (e.g., light which is linearly polarized in a vertical direction).
(5) The linearly polarized light (4), which is polarized in a direction different from a transmission axis of the polarizing plate, cannot pass through the polarizing plate.

According to the above principle, a combination of the polarizing plate and the λ/4 phase plate can prevent light from entering the display panel, the light being caused by an image display and reflected without passing through the surface of the display device. This can (i) prevent a change in output value of a light sensor element due to an influence of reflected light from a display image and (ii) allows determination of an input location with higher accuracy.

In addition, a regular reflection component of reflected light from an object (referred to as an input object) such as a finger or an input pen by which an input is provided on the surface of the display device can also be blocked. This can prevent a deterioration in detection sensitivity of the light sensor element due to an influence of the reflected light from the input object.

The display device of the present invention is preferably arranged to further include: a λ/2 phase plate provided between the polarizing plate and the λ/4 phase plate, an optical axis of the λ/2 phase plate and an optical axis of the λ/4 phase plate intersecting with each other.

Note here that an arrangement in which only the λ/4 phase plate is provided on the polarizing plate allows only light having a wavelength of 550 nm to be circularly polarized light and causes light having a wavelength other than 550 nm to be elliptically polarized light. In contrast, a phase plate formed by stacking the λ/2 phase plate and the λ/4 phase plate allows light having a wavelength other than 550 nm to be circularly polarized light.

Therefore, according to the arrangement, a display device can be obtained which (i) prevents a reflection of light coming from a display image that contains light having various wavelengths and (ii) allows determination of an input location with high accuracy.

Note that the phase plate, which is formed by stacking the λ/2 phase plate and the λ/4 phase plate and can convert light having a broadband wavelength to circularly polarized light as described above, is referred to as a broadband λ/4 phase plate.

The display device of the present invention is preferably arranged such that the λ/2 phase plate and the λ/4 phase plate are provided so that the optical axis of the λ/2 phase plate and the optical axis of the λ/4 phase plate intersect with each other at an angle p falling within a range of 50° < p < 70°.

The arrangement allows light having not only a wavelength of 550 nm but also a broader band wavelength to be circularly polarized light, the light passing through the polarizing plate and then entering the λ/2 phase plate and the λ/4 phase plate.

Therefore, according to the arrangement, a display device can be obtained which (i) prevents a reflection of light coming from a display image that contains light having various wavelengths and (ii) allows determination of an input location with higher accuracy.

The display device of the present invention is preferably arranged such that: when (i) the λ/4 phase plate, the λ/2 phase plate, and the polarizing plate are provided along an x-y plane defined by an x-axis and a y-axis which are two axes that are orthogonal to each other, and (ii) a positive direction of the y-axis is 0° and a positive direction of the x-axis is 90°, the λ/4 phase plate, the λ/2 phase plate, and the polarizing plate are provided so that: the optical axis of the λ/4 phase plate is at an angle of 20°, the optical axis of the λ/4 phase plate is at an angle of 75°, and a transmission axis of the polarizing plate is at an angle of 90°.

The arrangement allows light having not only a wavelength of 550 nm but also a broader band wavelength (specifically, visible light having a wavelength of not less than 400 nm and not more than 700 nm) to be circularly polarized light, the light passing through the polarizing plate and then entering the λ/2 phase plate and the λ/4 phase plate.

Therefore, according to the arrangement, a display device can be obtained which (i) prevents a reflection of light coming from a display image that contains light having various wavelengths and (ii) allows determination of an input location with higher accuracy.

The display device of the present invention is preferably arranged such that: the λ/2 phase plate and the λ/4 phase plate are made of a single material; and in a case where respective refractive indices along orthogonal axes in a phase plate plane are nx and ny and a refractive index in a phase plate thickness direction is nz, nx, ny, and nz satisfy a relationship of nx > ny and (nx - nz) < (nx - ny) in at least one of the λ/2 phase plate and the λ/4 phase plate.

The arrangement allows light having not only a wavelength of 550 nm but also a broader band wavelength to be circularly polarized light, the light passing through the polarizing plate and then entering the λ/2 phase plate and the λ/4 phase plate.

Therefore, according to the arrangement, a display device can be obtained which (i) prevents a reflection of light coming from a display image that contains light having various wavelengths and (ii) allows determination of an input location with higher accuracy.

Note that according to the display device of the present invention, it is only necessary that at least one of the λ/2 phase plate and the λ/4 phase plate satisfy the above relationship and it is more preferable that both the λ/2 phase plate and the λ/4 phase plate satisfy the above relationship.

The display device of the present invention is preferably arranged to further include a TAC film provided on the λ/4 phase plate.

TAC of the TAC film refers to triacetylcellulose. The TAC film is such that nx, ny, and nz has a relationship of nx = ny > nz and a retardation value given by |nx - nz|d is generally not less than 50 nm and not more than 60 nm. Note here that nx, ny, and nz refer to three principal refractive indices in x, y, and z-axis directions which are orthogonal to each other.

The display device including the TAC film can yield an effect of protecting the polarizing plate.

The display device of the present invention is preferably arranged to further include a protection plate provided a protection plate provided above a surface of the TAC film on which surface no λ/4 phase plate is provided.

The display device including the protection plate can prevent (i) a crack and/or a stain in the display panel including the polarizing plate provided in the display panel and (ii) breakage of the display panel. Note that, since the display device includes the protection plate, there exist a plurality of layers between the display panel and a top surface of the display device. Therefore, it is expected that a display image will be reflected by a boundary surface between the respective layers, so as to cause a deterioration in detection accuracy of a light sensor element. However, according to the present invention, the display device including the polarizing plate, the λ/2 phase plate, and the λ/4 phase can reduce light reflected by each of the boundary surfaces. This can prevent a deterioration in accuracy of a light sensor element.

The display device of the present invention is preferably arranged to further include an air layer provided between the TAC film and the protection plate.

Since the display device includes the air layer or a resin layer provided between the TAC film and the protection plate, there exist more layers between the display panel and the top surface of the display device. Therefore, it is expected that light reflected by a boundary surface between the respective layers influences a further deterioration in detection accuracy of a light sensor element. However, according to the present invention, the display device including the polarizing plate, the λ/2 phase plate, and the λ/4 phase can reduce light reflected by each of the boundary surfaces. This can prevent a deterioration in accuracy of a light sensor element.

The display device of the present invention can be arranged such that the display panel is a liquid crystal panel.

The display device of the present invention can be arranged to further include: a backlight which emits light toward the liquid crystal panel, the backlight including a light source which emits visible light.

The display device of the present invention can be arranged to further include: a backlight which emits light toward the liquid crystal panel, the backlight including (i) a light source which emits visible light and (ii) a light source which emits infrared light.

The display device of the present invention can be arranged to further include an infrared light transmitting section which is provided above a corresponding one of the plurality of light sensor elements and selectively transmits infrared light.

The display device of the present invention can be arranged to further include: a backside polarizing plate provided between the liquid crystal panel and the backlight, the polarizing plate causing infrared light to be linearly polarized, the polarizing plate being provided on or above the surface of the liquid crystal panel which surface is on the image display surface side, the backside polarizing plate causing visible light to be linearly polarized and preventing infrared light from being linearly polarized.

According to the arrangement, infrared light emitted from the light source which emits infrared light can go out of the device top surface, and the polarizing plate (front side polarizing plate) provided on the image display surface side can block infrared light reflected by the device top surface, and the like.

The display device of the present invention can be arranged such that the display panel is a self-luminous display panel.

The present invention is not limited to the description of the embodiments above, but may be altered by a skilled person within the scope of the claims. An embodiment based on a proper combination of technical means disclosed in different embodiments is encompassed in the technical scope of the present invention.

### Industrial Applicability

A display device of the present invention (i) prevents a reflection of light coming from a display image which contains various wavelengths and (ii) allows determination of an input location with high accuracy. The display device of the present invention is usable for a display device having a touch panel function.

### Reference Signs List

- 10: Backlight
- 11: Backlight
- 20: Liquid crystal panel (Display panel)
- 20a: Infrared light sensor equipped liquid crystal panel (Display panel)
- 20b: Self-luminous panel (Display panel)
- 21: Active matrix substrate
- 22: Counter substrate
- 23: Liquid crystal layer
- 24: Color filter layer
- 30: Light sensor element
- 31: Light sensor element
- 32: Infrared light transmitting filter (Infrared light transmitting section)
- 40a: Front side polarizing plate (Polarizing plate)
- 40c: Front side polarizing plate (Polarizing plate)
- 50: Broadband λ/4 phase plate
- 50a: λ/4 phase plate
- 50b: λ/2 phase plate
- 60: TAC film
- 80: Air layer
- 90: Protection plate
- 100: Liquid crystal display device (Display device)
- 200: Liquid crystal display device (Display device)
- 300: Liquid crystal display device (Display device)
- 400: Liquid crystal display device (Display device)
- 500: Self-luminous display device (Display device)
- 600: Self-luminous display device

## Claims

1. A display device including a display panel provided with a plurality of light sensor elements, and having an area sensor function in which the plurality of light sensor elements detect an image on a surface of the display device, so as to determine a location of an input from outside,
said display device comprising:
a polarizing plate provided on or above a surface of the display panel which surface is on an image display surface side; and
a λ/4 phase plate provided on or above a surface of the polarizing plate which surface is on the image display surface side.

2. The display device as set forth in claim 1, further comprising:
a λ/2 phase plate provided between the polarizing plate and the λ/4 phase plate,
an optical axis of the λ/2 phase plate and an optical axis of the λ/4 phase plate intersecting with each other.

3. The display device as set forth in claim 2, wherein the λ/2 phase plate and the λ/4 phase plate are provided so that the optical axis of the λ/2 phase plate and the optical axis of the λ/4 phase plate intersect with each other at an angle p falling within a range of 50° < p < 70°.

4. The display device as set forth in claim 3, wherein:
when (i) the λ/4 phase plate, the λ/2 phase plate, and the polarizing plate are provided along an x-y plane defined by an x-axis and a y-axis which are two axes that are orthogonal to each other, and
(ii) a positive direction of the y-axis is 0° and a positive direction of the x-axis is 90°,
the λ/4 phase plate, the λ/2 phase plate, and the polarizing plate are provided so that:
the optical axis of the λ/4 phase plate is at an angle of 20°,
the optical axis of the λ/4 phase plate is at an angle of 75°, and
a transmission axis of the polarizing plate is at an angle of 90°.

5. The display device as set forth in any one of claims 2 through 4, wherein:
the λ/2 phase plate and the λ/4 phase plate are made of a single material; and
in a case where respective refractive indices along orthogonal axes in a phase plate plane are nx and ny and a refractive index in a phase plate thickness direction is nz,
nx, ny, and nz satisfy a relationship of nx > ny and (nx - nz) < (nx - ny) in at least one of the λ/2 phase plate and the λ/4 phase plate.

6. The display device as set forth in any one of claims 1 through 5, further comprising a TAC film provided on the λ/4 phase plate.

7. The display device as set forth in claim 6, further comprising a protection plate provided above a surface of the TAC film on which surface no λ/4 phase plate is provided.

8. The display device as set forth in claim 7, further comprising an air layer provided between the TAC film and the protection plate.

9. The display device as set forth in any one of claims 1 through 8, wherein the display panel is a liquid crystal panel.

10. The display device as set forth in claim 9, further comprising:
a backlight which emits light toward the liquid crystal panel,
the backlight including a light source which emits visible light.

11. The display device as set forth in claim 9, further comprising:
a backlight which emits light toward the liquid crystal panel,
the backlight including (i) a light source which emits visible light and (ii) a light source which emits infrared light.

12. The display device as set forth in claim 11, further comprising an infrared light transmitting section which is provided above a corresponding one of the plurality of light sensor elements and selectively transmits infrared light.

13. The display device as set forth in claim 11 or 12, further comprising:
a backside polarizing plate provided between the liquid crystal panel and the backlight,
the polarizing plate causing infrared light to be linearly polarized, the polarizing plate being provided on or above the surface of the liquid crystal panel which surface is on the image display surface side,
the backside polarizing plate causing visible light to be linearly polarized and preventing infrared light from being linearly polarized.

14. The display device as set forth in any one of claims 1 through 8, wherein the display panel is a self-luminous display panel.
